# EUROPÄISCHE PATENTSCHRIFT

(11) **EP 4 608 694 B1**
(45) Veröffentlichungstag und Bekanntmachung des Hinweises auf die Patenterteilung: **09.12.2026**
(21) Anmeldenummer: 23790251.5
(22) Anmeldetag: 12.10.2023
(51) Int. Cl.: B60W 50/00, B60K 35/00, B60W 50/08

(54) **FAHRERASSISTENZSYSTEM FÜR EIN FAHRZEUG UND VERFAHREN ZUM BETREIBEN EINES FAHRERASSISTENZSYSTEMS FÜR EIN FAHRZEUG**
DRIVER ASSISTANCE SYSTEM FOR A VEHICLE AND METHOD FOR OPERATING A DRIVER ASSISTANCE SYSTEM FOR A VEHICLE
SYSTÈME D'AIDE À LA CONDUITE POUR UN VÉHICULE ET PROCÉDÉ DE FONCTIONNEMENT D'UN SYSTÈME D'AIDE À LA CONDUITE POUR UN VÉHICULE

(30) Priorität: 27.10.2022 DE 102022211433
(43) Veröffentlichungstag der Anmeldung: 03.09.2025
(73) Patentinhaber: VOLKSWAGEN AKTIENGESELLSCHAFT, 38440 Wolfsburg (DE)
(72) Erfinder: LATTKE, Andreas, 38302 Wolfenbüttel (DE); DETTMER, Nils, 38102 Braunschweig (DE); KIRSTEIN, Oliver, 38102 Braunschweig (DE)
(86) Internationale Anmeldenummer: PCT/EP2023/078349
(87) Internationale Veröffentlichungsnummer: WO 2024/088777

(56) Entgegenhaltungen:
- DE-A1- 10 253 809
- DE-A1- 102016 204 901
- DE-A1- 102018 207 869
- DE-A1- 102019 205 942
- DE-A1- 102020 205 487

## Beschreibung

Die Erfindung betrifft ein Fahrerassistenzsystem für ein Fahrzeug und ein Verfahren zum Betreiben eines Fahrerassistenzsystems für ein Fahrzeug.

In modernen Fahrzeugen können Fahrerassistenzsysteme durch Vorgabe von Fahrprofilen an individuelle Präferenzen angepasst werden. Hierbei sind üblicherweise die folgenden Fahrprofile auswählbar: Normal, Sport, Komfort, Individuell, Effizienz (ECO).

Aus der DE 10 2020 215 058 A1 ist eine Setz-Einheit zum Bestimmen einer Sollgeschwindigkeit für ein querführendes Assistenzsystem eines zumindest teilweise assistiert fahrenden Kraftfahrzeugs bekannt, sowie ein Kraftfahrzeug, ein System, ein Verfahren und ein entsprechendes Computerprogramm. Es ist vorgesehen, dass querführende Assistenzsysteme, wie zum Beispiel der Travel Assist, das Fahrzeug quergeführt durch zum Beispiel eine Kurve fahren, wobei mit Hilfe von Schwarmdaten eine vorausschauende Regelung (zum Beispiel Reduzierung der Geschwindigkeit) ermöglicht werden soll. In der aktiven Regelung in einer Kurve entsteht eine Querbeschleunigung im Fahrzeug, welche abhängig von der Geschwindigkeit des Fahrzeugs sowie dem Kurvenradius ist. Aufgrund regulatorischer Anforderungen ist die erlaubte Querbeschleunigung limitiert, das heißt, bei höheren Kurvengeschwindigkeiten würde bei konstantem Radius das Limit der Querbeschleunigung überschritten und die querführende Funktion muss sicherstellen, dass die Querbeschleunigung nicht überschritten wird. Es erfolgt eine Erweiterung der Schwarmdaten um eine oder mehrere der folgenden Informationen: Querführung aktiv, gemessene Querbeschleunigung, Geschwindigkeit, Fahrwerk und/oder Lenkungstyp, Fahrzeugtyp.

Die DE 10 2018 207 869 A1 beschreibt ein Verfahren zur Bereitstellung einer Automatisierungsfunktion für ein Fahrzeug, bei dem Umfelddaten erfasst werden. In Abhängigkeit von den erfassten Umfelddaten wird die Automatisierungsfunktion aktiviert und es wird ein Qualitätsmaß bestimmt. Dabei wird anhand des Qualitätsmaßes eine Qualitätsstufe auf einer mehrstufigen Skala bestimmt und es wird eine grafische Ausgabe erzeugt und ausgegeben. Dabei umfasst die Ausgabe ein Qualitätsanzeigeelement, wobei das Qualitätsanzeigeelement in Abhängigkeit von dem Qualitätsmaß gebildet wird. Ferner ist ein System beschrieben zur Bereitstellung einer Automatisierungsfunktion für ein Fahrzeug, umfassend eine Erfassungseinheit zum Erfassen von Umfelddaten, eine Auswertungseinheit, die dazu eingerichtet ist, in Abhängigkeit von den erfassten Umfelddaten die Automatisierungsfunktion zu aktivieren und ein Qualitätsmaß zu bestimmen, und eine Steuereinheit, die dazu eingerichtet ist, eine grafische Ausgabe zu erzeugen und mittels einer Anzeigeeinheit auszugeben. Dabei umfasst die Ausgabe ein Qualitätsanzeigeelement, wobei das Qualitätsanzeigeelement in Abhängigkeit von dem Qualitätsmaß gebildet wird.

Der Erfindung liegt die Aufgabe zu Grunde, ein Fahrerassistenzsystem für ein Fahrzeug und ein Verfahren zum Betreiben eines Fahrerassistenzsystems für ein Fahrzeug zu verbessern.

Die Aufgabe wird erfindungsgemäß durch ein Fahrerassistenzsystem mit den Merkmalen des Patentanspruchs 1 und ein Verfahren mit den Merkmalen des Patentanspruchs 9 gelöst. Vorteilhafte Ausgestaltungen der Erfindung ergeben sich aus den Unteransprüchen.

Insbesondere wird ein Fahrerassistenzsystem für ein Fahrzeug geschaffen, wobei das Fahrerassistenzsystem dazu eingerichtet ist, dass Steuergrößen und/oder Parameter des Fahrerassistenzsystems anhand von auswählbaren Fahrprofilen festgelegt werden können, wobei mindestens ein Fahrprofil auswählbar ist, bei dem die Steuergrößen und/oder Parameter des Fahrerassistenzsystems positionsabhängig mit Hilfe von Schwarmdaten festgelegt werden.

Ferner wird insbesondere ein Verfahren zum Betreiben eines Fahrerassistenzsystems für ein Fahrzeug zur Verfügung gestellt, wobei Steuergrößen und/oder Parameter des Fahrerassistenzsystems anhand von auswählbaren Fahrprofilen festgelegt werden, wobei mindestens ein Fahrprofil vorgesehen ist, bei dem die Steuergrößen und/oder Parameter des Fahrerassistenzsystems positionsabhängig mit Hilfe von Schwarmdaten festgelegt werden.

Das Fahrerassistenzsystem und das Verfahren ermöglichen es einem Nutzer des Fahrzeugs, gezielt das Fahrprofil für Schwarmdaten auszuwählen. Hierdurch kann der Nutzer selbst entscheiden, wann eine Unterstützung auf Grundlage von Schwarmdaten erfolgen soll und wann nicht. Dies erfolgt, indem mindestens ein (auswählbares) Fahrprofil zur Verfügung gestellt wird, bei dem die Steuergrößen und/oder Parameter des Fahrerassistenzsystems positionsabhängig mit Hilfe von Schwarmdaten festgelegt werden. Neben den üblichen Fahrprofilen, wie beispielsweise Normal, Komfort, Effizienz (ECO) etc., kann der Nutzer dann mindestens ein Fahrprofil auswählen, bei dem die Schwarmdaten die Grundlage für die Unterstützung bilden. Dies erhöht einen Komfort und erweitert die Möglichkeiten, individuelle Nutzerpräferenzen zu berücksichtigen. Insbesondere kann hierdurch eine nutzerseitige Akzeptanz für die Verwendung von Schwarmdaten als Grundlage der Unterstützung erhöht werden. Die Schwarmdaten können insbesondere auch als eine Art Empfehlung für eine Fahrt und/oder für ein Verhalten dienen.

Die Fahrprofile werden beispielsweise auf einer Anzeige- und Bedieneinrichtung, beispielsweise auf einem Touchscreen, zur Auswahl angeboten, sodass ein Nutzer diese auswählen kann. Dort wird dann auch das mindestens eine Fahrprofil für die schwarmdatenbasierte Unterstützung zur Auswahl angeboten. Wird dieses mindestens eine Fahrprofil (Schwarmdaten-Fahrprofil) ausgewählt, so werden die Steuergrößen und/oder Parameter des Fahrerassistenzsystems positionsabhängig ausgehend von den Schwarmdaten festgelegt.

Die Steuergrößen können beispielsweise eine oder mehrere der folgenden Größen umfassen: eine Geschwindigkeit, eine Beschleunigung und/oder eine Verzögerung, einen Lenkwinkel, eine Position innerhalb oder außerhalb einer Fahrspur, eine Vertikalbeschleunigung, eine Lichteinstellung und/oder eine Wischereinstellung etc. Hierbei ist insbesondere vorgesehen, dass die Steuergrößen als mehrdimensionale (Schwarm-)Trajektorie bereitgestellt werden. Parameter können beispielsweise Kennlinien für eine Lenkunterstützung und/oder Fahrpedalkennlinien etc. sein, welche insbesondere bestimmen, wie stark eine Lenkeingabe an einem Lenkrad bzw. eine Eingabe am Fahrpedal umgesetzt wird. Die Steuergrößen und/oder Parameter sind hierbei positionsabhängig, das heißt, diese werden ausgehend von einer aktuellen Position des Fahrzeugs festgelegt bzw. bereitgestellt. Eine Position kann hierbei insbesondere in einem Globalkoordinatensystem angegeben werden. Die aktuelle Position wird dem Fahrerassistenzsystem beispielsweise von einem Globalen Navigationssatellitensystem (GNSS) zur Verfügung gestellt, beispielsweise von dem Global Positioning System (GPS).

Das Fahrerassistenzsystem kann grundsätzlich im manuellen Betrieb, im teilautomatisierten Betrieb und im automatisierten Betrieb des Fahrzeugs eingesetzt werden. Im manuellen Betrieb bestimmen die Schwarmdaten dann insbesondere eine Lenkunterstützung und/oder über eine Fahrpedalkennlinie das Ansprechen des Fahrpedals auf eine Eingabe. Gleiches gilt für den teilautomatisierten Betrieb, wobei hierbei auch eine Unterstützung gemäß den Schwarmdaten im Rahmen der vorgenannten beispielhaften Steuergrößen stattfinden kann. Im automatisierten Betrieb erfolgt eine Steuerung und/oder Regelung einer Läng- und einer Querführung des Fahrzeugs in automatisierter Weise, wobei hierbei die Steuergrößen und/oder Parameter der Schwarmdaten umgesetzt werden.

Teile des Fahrerassistenzsystems können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

In einer Ausführungsform ist vorgesehen, dass das Fahrerassistenzsystem dazu eingerichtet ist, dass eine durch das Fahrerassistenzsystem bereitgestellte Art der Unterstützung ausgewählt werden kann. Hierdurch kann der Nutzer einstellen, in welcher Form und/oder zu welchem Ausmaß eine Unterstützung bereitgestellt werden soll. Beispielsweise kann vorgesehen sein, dass eine Querführung oder eine Längsführung oder eine Quer- und Längsführung unterstützt werden sollen und diese Möglichkeiten ausgewählt werden können, beispielsweise auf einer hierfür eingerichteten Anzeige- und Bedieneinrichtung.

In einer Ausführungsform ist vorgesehen, dass das Fahrerassistenzsystem dazu eingerichtet ist, dass Steuergrößen und/oder Parameter verschiedener Fahrprofile gemischt werden können. Hierdurch können die Steuergrößen und/oder Parameter an individuelle Präferenzen eines Nutzers angepasst werden. Das Einstellen eines Mischungsverhältnisses kann beispielsweise mittels Schiebereglern, insbesondere auf der Anzeige- und Bedieneinrichtung, erfolgen. Beispielsweise kann vorgesehen sein, die Steuergrößen und/oder Parameter zu 80 % durch die Schwarmdaten und zu 20 % durch eine Sensorik (oder auch durch ein anderes Fahrprofil) des Fahrzeugs festlegen zu lassen.

In einer weiterbildenden Ausführungsform ist vorgesehen, dass das Fahrerassistenzsystem dazu eingerichtet ist, ein Mischungsverhältnis mittels eines Verfahrens der Künstlichen Intelligenz festzulegen. Hierdurch kann das Mischungsverhältnis situationsangepasst festgelegt werden. Das Verfahren der Künstlichen Intelligenz umfasst beispielsweise das Anwenden eines trainierten Neuronalen Netzes. Als Eingangsgrößen des Neuronalen Netzes werden beispielsweise erfasste Sensordaten eines Umfelderfassungssystems des Fahrzeugs verwendet. In Abhängigkeit der erfassten Sensordaten schätzt das Neuronale Netz dann ein optimales Mischungsverhältnis. Die Künstliche Intelligenz, insbesondere das Neuronale Netz, werden hierzu entsprechend trainiert, wobei die Trainingsdaten beispielsweise anhand von empirisch gewonnenen Kombinationen aus Eingangsdaten (z.B. Sensordaten) und als optimal oder gewünscht erachteten Mischungsverhältnissen gewonnen werden.

In einer Ausführungsform ist vorgesehen, dass das Fahrerassistenzsystem dazu eingerichtet ist, die Schwarmdaten von einem zentralen Server und/oder von mindestens einem anderen Fahrzeug abzurufen und/oder zu empfangen. Hierdurch können stets aktuelle Schwarmdaten bereitgestellt und verwendet werden. Der zentrale Server sammelt insbesondere positionsabhängige Steuergrößen und/oder Parameter der Fahrerassistenzsysteme, welche dem zentralen Server beispielsweise von einer Fahrzeugflotte bereitgestellt werden. Ausgehend von den gesammelten Steuergrößen und/oder Parametern erzeugt der zentrale Server dann Schwarmdaten und stellt diese den Fahrerassistenzsystemen bereit. Das Erzeugen der Schwarmdaten erfolgt insbesondere durch statistische Auswertung, beispielsweise durch positionsabhängige Mittelwertbildung, bei der für einzelne Positionen jeweils die Mittelwerte der Steuergrößen (z.B. Position, Geschwindigkeit, Beschleunigung und/oder Lenkwinkel etc.) und/oder Parameter (z.B. Kennlinien der Steuerung/Regelung) der Fahrzeuge der Fahrzeugflotte gebildet werden. In der Regel ist davon auszugehen, dass die Werte eine Gaußverteilung zeigen, sodass durch Anpassen einer Gaußfunktion jeweils ein Mittelwert für die Steuergrößen und/oder Parameter bestimmt werden kann, welcher die Grundlage für die Schwarmdaten bilden kann. Grundsätzlich kann das Erzeugen der Schwarmdaten jedoch auch auf andere Weise erfolgen.

In einer Ausführungsform ist vorgesehen, dass das Fahrerassistenzsystem dazu eingerichtet ist, die Schwarmdaten zu vorgegebenen Zeitpunkten abzurufen und/oder zu empfangen. Hierdurch können stets aktuelle Schwarmdaten verwendet werden. Insbesondere kann vorgesehen sein, dass die Schwarmdaten täglich abgerufen und/oder übermittelt werden. Ferner kann auch eine häufigere Abfrage und/oder Übermittelung erfolgen. Es kann beispielsweise vorgesehen sein, dass ein Fahrerassistenzsystem vor jedem Fahrtbeginn bei bekannter geplanter Strecke die Schwarmdaten für diese geplante Strecke bei einem zentralen Server abfragt und/oder diese von dem zentralen Server übermittelt bekommt und empfängt. Hierzu übermittelt das Fahrerassistenzsystem beispielsweise zugehörige Positionen und/oder sonstige die Strecke kennzeichnende Informationen an den zentralen Server, welcher ausgehend hiervon aktuelle Schwarmdaten (d.h. Steuergrößen und/oder Parameter) bereitstellt.

In einer Ausführungsform ist vorgesehen, dass das Fahrerassistenzsystem dazu eingerichtet ist, ein aus den Schwarmdaten abgeleitetes Verhalten des Fahrerassistenzsystems mit einem manuellen Verhalten eines Fahrers des Fahrzeugs oder einem teilautomatisierten oder automatisierten Verhalten des Fahrzeugs zu vergleichen und das manuelle Verhalten oder das teilautomatisierte oder automatisierte Verhalten und/oder ein Vergleichsergebnis an einen zentralen Server und/oder an mindestens ein anderes Fahrzeug zu übermitteln. Hierdurch können die Schwarmdaten einer Überprüfung unterzogen werden. Umfassen Steuergrößen der Schwarmdaten beispielsweise eine Trajektorie des Schwarms, so kann überprüft werden, ob bei einer manuellen, teilautomatisierten oder automatisierten Führung des Fahrzeugs diese Trajektorie umgesetzt wurde oder nicht. Ausgehend von einem Vergleichsergebnis können die Schwarmdaten dann serverseitig angepasst werden. Hierdurch kann insbesondere eine fortlaufende Aktualisierung der auf dem zentralen Server hinterlegten Schwarmdaten erreicht werden. Ändert sich beispielsweise eine Baustellensituation, so können die Schwarmdaten über die real auftretenden (Ist-)Steuergrößen und/oder die real verwendeten (Ist-)Parameter aktualisiert werden.

In einer Ausführungsform ist vorgesehen, dass die Schwarmdaten vor einem Übermitteln an das Fahrerassistenzsystem und/oder einem Anwenden durch das Fahrerassistenzsystem ausgehend von vorgegebenen Präferenzen angepasst werden. Hierdurch kann ein Hersteller oder ein Eigentümer des Fahrzeugs eine bestimmte Form der Schwarmdaten vorschreiben. Beispielsweise kann ein Leasingunternehmen eine bestimmte Fahrweise vorgeben, um eine schonende Fahrzeugführung zu erreichen. Insbesondere werden hierzu die Steuergrößen und/oder die Parameter entsprechend den jeweiligen Präferenzen angepasst.

Weitere Merkmale zur Ausgestaltung des Verfahrens ergeben sich aus der Beschreibung von Ausgestaltungen des Fahrerassistenzsystems. Die Vorteile des Verfahrens sind hierbei jeweils die gleichen wie bei den Ausgestaltungen des Fahrerassistenzsystems.

Es wird ferner insbesondere auch ein Fahrzeug geschaffen, umfassend ein Fahrerassistenzsystem nach einer der beschriebenen Ausführungsformen. Ein Fahrzeug ist insbesondere ein Kraftfahrzeug.

Weiter wird insbesondere auch ein System zum Betreiben von Fahrerassistenzsystemen geschaffen, umfassend Fahrerassistenzsysteme gemäß einer der beschriebenen Ausführungsformen und einen zentralen Server, wobei die Fahrerassistenzsysteme dazu eingerichtet sind, bei Wahl eines hierfür vorgesehenen Fahrprofils positionsabhängige Schwarmdaten von dem zentralen Server abzufragen und/oder zu empfangen, wobei der zentrale Server dazu eingerichtet ist, positionsabhängige Steuergrößen und/oder Parameter der Fahrerassistenzsysteme zu sammeln, ausgehend von den gesammelten Steuergrößen und/oder Parametern Schwarmdaten zu erzeugen und diese den Fahrerassistenzsystemen bereitzustellen.

Das Fahrerassistenzsystem umfasst insbesondere eine Kommunikationsschnittstelle, um mit dem zentralen Server zu kommunizieren. Ferner umfasst der zentrale Server insbesondere eine Kommunikationsschnittstelle, um mit den Fahrerassistenzsystemen kommunizieren zu können.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Fahrerassistenzsystems;
- Fig. 2: eine schematische Darstellung zur Verdeutlichung einer Ausführungsform des Fahrerassistenzsystems und des Verfahrens.

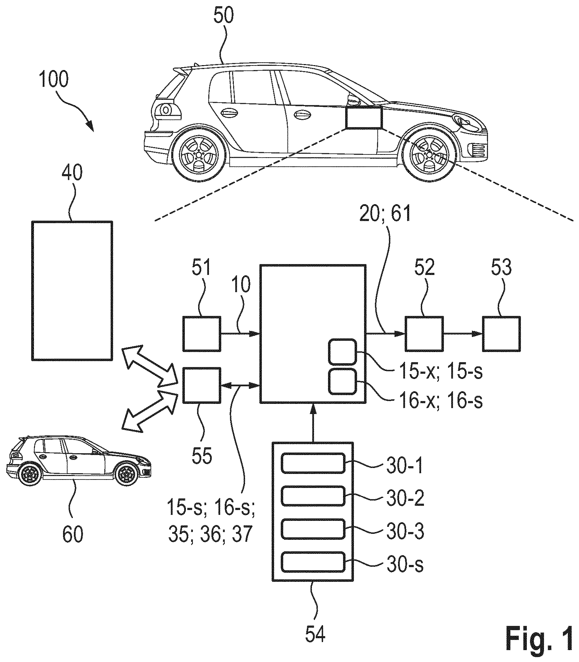

Die Fig. 1 zeigt eine schematische Darstellung einer Ausführungsform des Fahrerassistenzsystems 1. Das Fahrerassistenzsystem 1 ist in einem Fahrzeug 50 angeordnet und dient dort einer Unterstützung eines Fahrers oder Nutzers beim manuellen, teilautomatisierten oder automatisierten Fahren. Dem Fahrerassistenzsystem 1 werden hierzu beispielsweise Sensordaten 10 einer Sensorik 51 des Fahrzeugs 50 zugeführt. Das Fahrerassistenzsystem 1 erzeugt ausgehend von den Sensordaten 10 beispielsweise Steuersignale 20 für eine Fahrzeugsteuerung 52, welche eine Aktorik 53 (Längsführung und/oder Querführung) des Fahrzeugs 50 steuert. Das Fahrerassistenzsystem 1 kann hierdurch das Fahrzeug 50 steuern (und/oder regeln) oder eine Steuerung (und/oder Regelung) beeinflussen.

Das Fahrerassistenzsystem 1 ist dazu eingerichtet, dass Steuergrößen 15-x und/oder Parameter 16-x des Fahrerassistenzsystems 1 anhand von auswählbaren Fahrprofilen 30-x festgelegt werden können. Hierbei ist vorgesehen, dass mindestens ein Fahrprofil 30-s auswählbar ist, bei dem die Steuergrößen 15-s und/oder Parameter 16-s des Fahrerassistenzsystems 1 positionsabhängig mit Hilfe von Schwarmdaten festgelegt werden.

Es kann beispielsweise vorgesehen sein, dass die Fahrprofile 30-x auf einer Anzeige- und Bedieneinrichtung 54, beispielsweise auf einem Touchscreen, des Fahrzeugs 50 angezeigt werden und dort durch eine Nutzereingabe ausgewählt werden können. Beispielsweise können die folgenden Fahrprofile 30-x ausgewählt werden: Normalmodus, Effizienzmodus, Sportmodus und "Schwarmdaten" oder "Schwarmmodus" (30-s). Nach Auswahl des Fahrprofils 30-s für die Schwarmdaten, werden die Steuergrößen 15-s und/oder die Parameter 16-s, welche mit dem Fahrprofil 30-s für die Schwarmdaten korrespondieren von dem Fahrerassistenzsystem 1 verwendet, beispielsweise, indem diese in einen hierfür vorgesehenen Arbeitsspeicher (nicht gezeigt) geladen werden.

Es kann vorgesehen sein, dass das Fahrerassistenzsystem 1 dazu eingerichtet ist, dass eine durch das Fahrerassistenzsystem 1 bereitgestellte Art der Unterstützung ausgewählt werden kann. Beispielsweise können nur eine Querführung oder nur eine Längsführung unterstützt werden. Alternativ können auch eine Querführung und eine Längsführung unterstützt werden. Der Fahrer oder Nutzer des Fahrzeugs kann hierdurch individuelle Präferenzen für die Unterstützung festlegen.

Es kann vorgesehen sein, dass das Fahrerassistenzsystem 1 dazu eingerichtet ist, dass Steuergrößen 15-x und/oder Parameter 15-x verschiedener Fahrprofile 30-x gemischt werden können. Ein Mischungsverhältnis kann beispielsweise ebenfalls über die Anzeige- und Bedieneinrichtung 54 des Fahrzeugs 50 vorgegeben werden. Beispielsweise kann das Mischungsverhältnis über Schieberegler (Slider) eingestellt werden. Beispielsweise können Steuergrößen 15-1 und/oder Parameter 16-1, die (ausschließlich) aus einer Sensorik 51 des Fahrzeugs 50 abgeleitet werden, zu 20 % berücksichtigt werden und Steuergrößen 15-s und/oder Parameter 16-s des Fahrprofils 30-s der Schwarmdaten zu 80 %. Hierdurch werden beispielsweise Fahrpedalkennlinien in dem angegebenen Verhältnis gemischt. Auch Trajektorien, welche von den positionsabhängigen Steuergrößen 15-1, 15-s umfasst sind bzw. durch diese beschrieben werden, können zu einer neuen Trajektorie gemischt werden. So kann beispielsweise ein Kurvenradius von zwei Trajektorien in dem vorgenannten Verhältnis gemischt werden, sodass eine neue Trajektorie mit dem gemischten (bzw. dem im vorgenannten Verhältnis gewichtet gemittelten) Kurvenradius entsteht.

Es kann weiterbildend vorgesehen sein, dass das Fahrerassistenzsystem 1 dazu eingerichtet ist, ein Mischungsverhältnis mittels eines Verfahrens der Künstlichen Intelligenz festzulegen.

Es kann vorgesehen sein, dass das Fahrerassistenzsystem 1 dazu eingerichtet ist, die Schwarmdaten von einem zentralen Server 40 und/oder von mindestens einem anderen Fahrzeug 60 abzurufen und/oder zu empfangen. Dies erfolgt beispielsweise über eine hierfür geeignete Kommunikationsschnittstelle 55 (z.B. Car-to-X, Internet etc.) des Fahrzeugs 50.

Es kann vorgesehen sein, dass das Fahrerassistenzsystem 1 dazu eingerichtet ist, die Schwarmdaten zu vorgegebenen Zeitpunkten abzurufen und/oder zu empfangen. Insbesondere kann vorgesehen sein, dass die Schwarmdaten vor einem Fahrtbeginn für eine geplante Strecke abgefragt und/oder empfangen werden. Beispielsweise kann dies nach Eingeben eines Navigationszieles erfolgen, wenn eine Strecke von einem aktuellen Ort zu einem Navigationsziel bestimmt wurde.

Es kann vorgesehen sein, dass das Fahrerassistenzsystem 1 dazu eingerichtet ist, ein aus den Schwarmdaten abgeleitetes Verhalten des Fahrerassistenzsystems 1 mit einem manuellen Verhalten 35 eines Fahrers des Fahrzeugs 50 oder einem teilautomatisierten oder automatisierten Verhalten 36 des Fahrzeugs 50 zu vergleichen und das manuelle Verhalten 35 oder teilautomatisierte oder automatisierte Verhalten 36 und/oder ein Vergleichsergebnis 37 an einen zentralen Server 40 und/oder an mindestens ein anderes Fahrzeug 50 zu übermitteln.

Durch das Fahrerassistenzsystem 1, weitere Fahrerassistenzsysteme (nicht gezeigt) und den zentralen Server 40 wird insbesondere ein System 100 zum Betreiben von Fahrerassistenzsystemen 1 ausgebildet. Die Fahrerassistenzsysteme 1 sind dazu eingerichtet, bei Wahl eines hierfür vorgesehenen Fahrprofils 30-s positionsabhängige Schwarmdaten von dem zentralen Server 40 abzufragen und/oder zu empfangen. Der zentrale Server 40 ist dazu eingerichtet, positionsabhängige Steuergrößen 15 und/oder Parameter 16 der Fahrerassistenzsysteme 1 zu sammeln, ausgehend von den gesammelten Steuergrößen 15 und/oder Parametern 16 Schwarmdaten zu erzeugen und diese den Fahrerassistenzsystemen 1 als Steuergrößen 15-s und/oder Parameter 16-s bereitzustellen.

Es kann vorgesehen sein, dass die Schwarmdaten vor einem Übermitteln an das Fahrerassistenzsystem 1 und/oder einem Anwenden durch das Fahrerassistenzsystem 1 ausgehend von vorgegebenen Präferenzen angepasst werden. Hierdurch kann ein Hersteller oder ein Eigentümer des Fahrzeugs 50 eine bestimmte Form der Schwarmdaten vorschreiben.

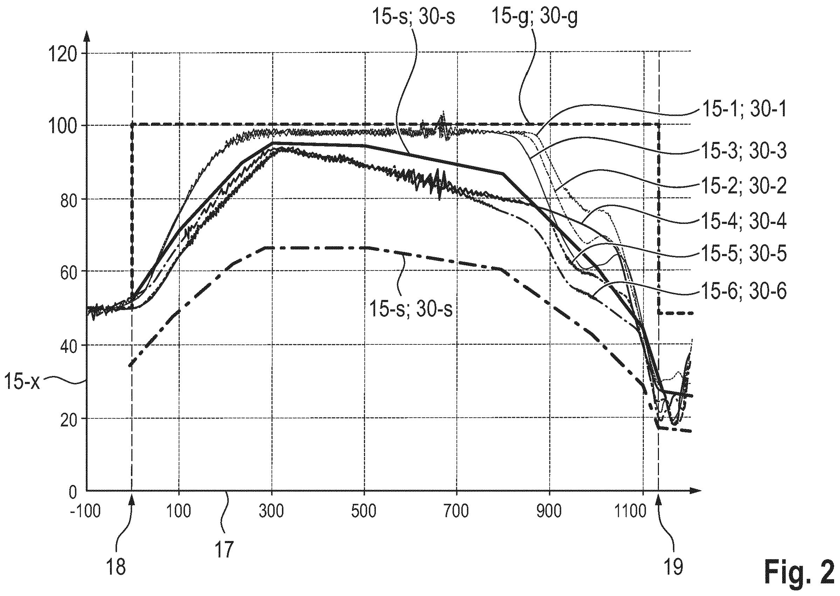

Die Fig. 2 zeigt eine schematische Darstellung zur Verdeutlichung einer Ausführungsform des Fahrerassistenzsystems und des Verfahrens. In der Fig. 2 dargestellt ist die positionsabhängige Steuergröße 15-x "Geschwindigkeit in km/h" (y-Achse) an einer beispielhaft gewählten Kurve zwischen einer Ortsausfahrt 18 und einem Kreisverkehr 19. Auf der x-Achse ist eine Distanz 17 in Metern dargestellt. Die Steuergröße 15-x ist jeweils für unterschiedliche Fahrprofile 30-x dargestellt.

Die Steuergröße 15-g entspricht den gesetzlich vorgeschriebenen Maximalgeschwindigkeiten. Die anderen Fahrprofile 30-x bzw. positionsaufgelösten Steuergrößen 15-x weisen beispielsweise die folgenden Eigenschaften auf:
- Fahrprofil 30-1 / Steuergröße 15-1: Sportmodus, Kurven werden schnell durchfahren;
- Fahrprofil 30-2 / Steuergröße 15-2: Sportmodus, Kurven werden normal durchfahren;
- Fahrprofil 30-3 / Steuergröße 15-3: Sportmodus, Kurven werden langsam durchfahren;
- Fahrprofil 30-4 / Steuergröße 15-4: Effizienzmodus, Kurven werden schnell durchfahren;
- Fahrprofil 30-5 / Steuergröße 15-5: Effizienzmodus, Kurven werden normal durchfahren;
- Fahrprofil 30-6 / Steuergröße 15-6: Effizienzmodus, Kurven werden langsam durchfahren.

Die Schwarmdaten liefern hingegen die Fahrprofile 30-s mit den Steuergrößen 15-s. Die obere Kurve zeigt hierbei ein Beispiel bei normalen Witterungsverhältnissen, wohingegen die untere Kurve ein Beispiel bei Eisglätte und schlechten Sichtverhältnissen zeigt.

Wird das ausgehend von den Schwarmdaten erzeugte Fahrprofil 30-s gewählt, so arbeitet das Fahrerassistenzsystem darauf hin, die Steuergrößen 15-s umzusetzen, das heißt, eine (Soll-)Geschwindigkeit wird positionsabhängig auf die Werte der Kurven gesetzt. Dies kann bei einem automatisiert fahrenden Fahrzeug direkt über die automatisiert gesteuerte oder geregelte Längsführung erfolgen. Bei einem teilautomatisiert fahrenden Fahrzeug erfolgt dies ebenfalls durch Eingriff in die gesteuerte oder geregelte Längsführung. Bei einem teilautomatisiert oder manuell gesteuerten Fahrzeug können hierzu insbesondere auch Kennlinien angepasst werden. Insbesondere kann eine Fahrpedalkennlinie positionsabhängig derart angepasst werden, dass das Fahrpedal stärker oder geringer anspricht, sodass eine Geschwindigkeit des Fahrzeugs der (Soll-)Geschwindigkeit (Steuergröße 15-s) des Fahrprofils 30-s, das über die Schwarmdaten erzeugt wurde, angenähert wird und/oder auf diese geregelt wird.

Die Fig. 2 zeigt als Steuergröße 15-x beispielhaft eine Geschwindigkeit des Fahrzeugs. Grundsätzlich ist das Vorgehen für andere Steuergrößen 15-x (z.B. Beschleunigung, Lenkwinkel etc.) und/oder Parameter (Kennlinien etc.) analog hierzu. Das Fahrerassistenzsystem versucht in jedem Fall, das Verhalten des Fahrzeugs an das Fahrprofil 30-s, das aus den Schwarmdaten erzeugt wurde, anzupassen.

### Bezugszeichenliste

- 1: Fahrerassistenzsystem
- 10: Sensordaten
- 15: Steuergröße
- 15-x: Steuergröße
- 15-g: Steuergröße (gesetzlich festgelegt)
- 15-s: Steuergröße (Schwarmdaten)
- 16: Parameter
- 16-x: Parameter
- 16-s: Parameter (Schwarmdaten)
- 17: Distanz
- 18: Ortsausfahrt
- 19: Kreisverkehr
- 20: Steuersignale
- 30-x: Fahrprofil
- 30-s: Fahrprofil (Schwarmdaten)
- 35: manuelles Verhalten
- 36: teilautomatisiertes oder automatisiertes Verhalten
- 37: Vergleichsergebnis
- 40: zentraler Server
- 50: Fahrzeug
- 51: Sensorik
- 52: Fahrzeugsteuerung
- 53: Aktorik
- 54: Anzeige- und Bedieneinrichtung
- 55: Kommunikationsschnittstelle
- 60: anderes Fahrzeug
- 100: System

## Patentansprüche

1. Fahrerassistenzsystem (1) für ein Fahrzeug (50),
wobei das Fahrerassistenzsystem (1) dazu eingerichtet ist, dass Steuergrößen (15,15-x) und/oder Parameter (16,16-x) des Fahrerassistenzsystems (1) anhand von auswählbaren Fahrprofilen (30-x) festgelegt werden können,
wobei mindestens ein Fahrprofil (30-s) auswählbar ist, bei dem die Steuergrößen (15-s) und/oder Parameter (16-s) des Fahrerassistenzsystems (1) positionsabhängig mit Hilfe von Schwarmdaten festgelegt werden.

2. Fahrerassistenzsystem (1) nach Anspruch 1, **dadurch gekennzeichnet, dass** das Fahrerassistenzsystem (1) dazu eingerichtet ist, dass eine durch das Fahrerassistenzsystem (1) bereitgestellte Art der Unterstützung ausgewählt werden kann.

3. Fahrerassistenzsystem (1) nach Anspruch 1 oder 2, **dadurch gekennzeichnet, dass** das Fahrerassistenzsystem (1) dazu eingerichtet ist, dass Steuergrößen (15,15-x) und/oder Parameter (15,15-x) verschiedener Fahrprofile (30-x) gemischt werden können.

4. Fahrerassistenzsystem (1) nach Anspruch 3, **dadurch gekennzeichnet, dass** das Fahrerassistenzsystem (1) dazu eingerichtet ist, ein Mischungsverhältnis mittels eines Verfahrens der Künstlichen Intelligenz festzulegen.

5. Fahrerassistenzsystem (1) nach einem der vorangegangenen Ansprüche, **dadurch gekennzeichnet, dass** das Fahrerassistenzsystem (1) dazu eingerichtet ist, die Schwarmdaten von einem zentralen Server (40) und/oder von mindestens einem anderen Fahrzeug (60) abzurufen und/oder zu empfangen.

6. Fahrerassistenzsystem (1) nach einem der vorangegangenen Ansprüche, **dadurch gekennzeichnet, dass** das Fahrerassistenzsystem (1) dazu eingerichtet ist, die Schwarmdaten zu vorgegebenen Zeitpunkten abzurufen und/oder zu empfangen.

7. Fahrerassistenzsystem (1) nach einem der vorangegangenen Ansprüche, **dadurch gekennzeichnet, dass** das Fahrerassistenzsystem (1) dazu eingerichtet ist, ein aus den Schwarmdaten abgeleitetes Verhalten des Fahrerassistenzsystems (1) mit einem manuellen Verhalten (35) eines Fahrers des Fahrzeugs (50) oder einem teilautomatisierten oder automatisierten Verhalten (36) des Fahrzeugs (50) zu vergleichen und das manuelle Verhalten (35) oder teilautomatisierte oder automatisierte Verhalten (36) und/oder ein Vergleichsergebnis (37) an einen zentralen Server (40) und/oder an mindestens ein anderes Fahrzeug (50) zu übermitteln.

8. System (100) zum Betreiben von Fahrerassistenzsystemen (1), umfassend:
Fahrerassistenzsysteme (1) gemäß einem der Ansprüche 1 bis 7, und
einen zentralen Server (40),
wobei die Fahrerassistenzsysteme (1) dazu eingerichtet sind, bei Wahl eines hierfür vorgesehenen Fahrprofils (30-s) positionsabhängige Schwarmdaten von dem zentralen Server (40) abzufragen und/oder zu empfangen, und
wobei der zentrale Server (40) dazu eingerichtet ist, positionsabhängige Steuergrößen (15,15-x) und/oder Parameter (16,16-x) der Fahrerassistenzsysteme (1) zu sammeln, ausgehend von den gesammelten Steuergrößen (15,15-x) und/oder Parametern (16,16-x) Schwarmdaten zu erzeugen und diese den Fahrerassistenzsystemen (1) bereitzustellen.

9. Verfahren zum Betreiben eines Fahrerassistenzsystems (1) für ein Fahrzeug (50),
wobei Steuergrößen (15,15-x) und/oder Parameter (16,16-x) des Fahrerassistenzsystems (1) anhand von auswählbaren Fahrprofilen (30-x) festgelegt werden,
wobei mindestens ein Fahrprofil (30-s) vorgesehen ist, bei dem die Steuergrößen (15-s) und/oder Parameter (16-s) des Fahrerassistenzsystems (1) positionsabhängig mit Hilfe von Schwarmdaten festgelegt werden.

10. Verfahren nach Anspruch 9, **dadurch gekennzeichnet, dass** die Schwarmdaten vor einem Übermitteln an das Fahrerassistenzsystem (1) und/oder einem Anwenden durch das Fahrerassistenzsystem (1) ausgehend von vorgegebenen Präferenzen angepasst werden.

## Claims

1. Driver assistance system (1) for a vehicle (50),
wherein the driver assistance system (1) is designed so that control variables (15, 15-x) and/or parameters (16, 16-x) of the driver assistance system (1) can be set on the basis of selectable driving profiles (30-x),
wherein at least one driving profile (30-s) can be selected in which the control variables (15-s) and/or parameters (16-s) of the driver assistance system (1) are set position-dependently using swarm data.

2. Driver assistance system (1) according to claim 1, **characterized in that** the driver assistance system (1) is designed to allow the selection of a type of assistance provided by the driver assistance system (1).

3. Driver assistance system (1) according to claim 1 or 2,
**characterized in that** the driver assistance system (1) is designed to allow control variables (15, 15-x) and/or parameters (15, 15-x) of different driving profiles (30-x) to be mixed.

4. Driver assistance system (1) according to claim 3, **characterized in that** the driver assistance system (1) is designed to set a mixing ratio by means of an artificial intelligence method.

5. Driver assistance system (1) according to any of the preceding claims, **characterized in that** the driver assistance system (1) is designed to retrieve and/or receive swarm data from a central server (40) and/or from at least one other vehicle (60).

6. Driver assistance system (1) according to any of the preceding claims, **characterized in that** the driver assistance system (1) is designed to retrieve and/or receive the swarm data at predefined times.

7. Driver assistance system (1) according to any of the preceding claims, **characterized in that** the driver assistance system (1) is designed to compare a behavior of the driver assistance system (1) derived from the swarm data with a manual behavior (35) of a driver of the vehicle (50) or a semi-automated or automated behavior (36) of the vehicle (50) and to transmit the manual behavior (35) or semi-automated or automated behavior (36) and/or a comparison result (37) to a central server (40) and/or to at least one other vehicle (50).

8. System (100) for operating driver assistance systems (1), comprising: driver assistance systems (1) according to any of claims 1 to 7, and
a central server (40),
wherein the driver assistance systems (1) are designed to retrieve and/or receive position-dependent swarm data from the central server (40) when a driving profile (30-s) provided for this purpose is selected, and
wherein the central server (40) is designed to collect position-dependent control variables (15, 15-x) and/or parameters (16, 16-x) of the driver assistance systems (1), to generate swarm data from the collected control variables (15, 15-x) and/or parameters (16, 16-x) and to provide these data to the driver assistance systems (1).

9. Method for operating a driver assistance system (1) for a vehicle (50), wherein control variables (15, 15-x) and/or parameters (16, 16-x) of the driver assistance system (1) are set on the basis of selectable driving profiles (30-x),
wherein at least one driving profile (30-s) is provided in which the control variables (15-s) and/or parameters (16-s) of the driver assistance system (1) are set position-dependently using swarm data.

10. Method according to claim 9, **characterized in that** the swarm data are adapted from predefined preferences before being transmitted to the driver assistance system (1) and/or applied by the driver assistance system (1).

## Revendications

1. Système d'aide à la conduite (1) pour un véhicule (50),
dans lequel le système d'aide à la conduite (1) est configuré de sorte que des grandeurs de commande (15, 15-x) et/ou des paramètres (16, 16-x) du système d'aide à la conduite (1) peuvent être définis à l'aide de profils de conduite (30-x) pouvant être sélectionnés,
dans lequel au moins un profil de conduite (30-s) peut être sélectionné, pour lequel les grandeurs de commande (15-s) et/ou les paramètres (16-s) du système d'aide à la conduite (1) sont définis en fonction de la position à l'aide de données en essaim.

2. Système d'aide à la conduite (1) selon la revendication 1,
**caractérisé en ce que** le système d'aide à la conduite (1) est configuré de sorte qu'un type d'assistance fourni par le système d'aide à la conduite (1) peut être sélectionné.

3. Système d'aide à la conduite (1) selon la revendication 1 ou 2,
**caractérisé en ce que** le système d'aide à la conduite (1) est configuré de sorte que des grandeurs de commande (15, 15-x) et/ou des paramètres (15, 15-x) de différents profils de conduite (30-x) peuvent être mélangés.

4. Système d'aide à la conduite (1) selon la revendication 3,
**caractérisé en ce que** le système d'aide à la conduite (1) est configuré pour définir un rapport de mélange à l'aide d'un procédé d'intelligence artificielle.

5. Système d'aide à la conduite (1) selon l'une des revendications précédentes, **caractérisé en ce que** le système d'aide à la conduite (1) est configuré pour appeler et/ou recevoir les données en essaim en provenance d'un serveur central (40) et/ou d'au moins un autre véhicule (60).

6. Système d'aide à la conduite (1) selon l'une des revendications précédentes, **caractérisé en ce que** le système d'aide à la conduite (1) est configuré pour appeler et/ou recevoir les données en essaim à des moments prédéfinis.

7. Système d'aide à la conduite (1) selon l'une des revendications précédentes, **caractérisé en ce que** le système d'aide à la conduite (1) est configuré pour comparer un comportement du système d'aide à la conduite (1) déduit des données en essaim avec un comportement manuel (35) d'un conducteur du véhicule (50) ou avec un comportement semi-automatisé ou automatisé (36) du véhicule (50), et pour transmettre le comportement manuel (35) ou le comportement semi-automatisé ou automatisé (36) et/ou un résultat de comparaison (37) à un serveur central (40) et/ou à au moins un autre véhicule (50).

8. Système (100) permettant de faire fonctionner des systèmes d'aide à la conduite (1), comprenant :
des systèmes d'aide à la conduite (1) selon l'une des revendications 1 à 7, et
un serveur central (40),
dans lequel les systèmes d'aide à la conduite (1) sont configurés pour, lors de la sélection d'un profil de conduite (30-s) prévu à cet effet, appeler et/ou recevoir en provenance du serveur central (40) des données en essaim dépendant de la position, et
dans lequel le serveur central (40) est configuré pour collecter des grandeurs de commande (15, 15-x) et/ou des paramètres (16, 16-x) des systèmes d'aide à la conduite (1) dépendant de la position, et, à partir des grandeurs de commande (15, 15-x) et/ou paramètres (16, 16-x) collectés, générer des données en essaim et les mettre à la disposition des systèmes d'aide à la conduite (1).

9. Procédé permettant de faire fonctionner un système d'aide à la conduite (1) pour un véhicule (50), dans lequel des grandeurs de commande (15, 15-x) et/ou des paramètres (16, 16-x) du système d'aide à la conduite (1) sont définis à partir de profils de conduite (30-x) pouvant être sélectionnés,
dans lequel au moins un profil de conduite (30-s) est prévu, pour lequel les grandeurs de commande (15-s) et/ou les paramètres (16-s) du système d'aide à la conduite (1) sont définis en fonction de la position à l'aide de données en essaim.

10. Procédé selon la revendication 9, **caractérisé en ce que** les données en essaim sont adaptées à partir de préférences prédéfinies avant une transmission au système d'aide à la conduite (1) et/ou une utilisation par le système d'aide à la conduite (1).
